# EUROPEAN PATENT SPECIFICATION

(11) **EP 0 654 486 B1**
(45) Date of publication and mention of the grant of the patent: **28.01.1998**
(21) Application number: 94308545.6
(22) Date of filing: 18.11.1994
(51) Int. Cl.: C08F 8/32

(54) **Copolymer production process**
Verfahren zur Herstellung von Copolymeren
Procédé de fabrication de copolymères

(30) Priority: 19.11.1993 JP 290554/93
(43) Date of publication of application: 24.05.1995
(73) Proprietor: Tosoh Corporation, Shinnanyo-shi, Mie-ken (JP)
(72) Inventor: Doi, Toru, Yokkaichi-shi, Mei-ken (JP)
(74) Representative: Kearney, Kevin David Nicholas

(56) References cited:
- EP-A- 0 009 185
- FR-A- 2 393 818
- US-A- 3 458 295
- US-A- 4 588 786
- PATENT ABSTRACTS OF JAPAN vol. 9, no. 45 (C-268) (1768) 26 February 1985 & JP-A-59 187 007 (MITSUBISHI MONSANTO KASEI K.K.) 24 October 1984

## Description

### Background of the Invention:

### Field of the Invention:

The present invention relates to a process for producing a copolymer which has low yellowness and high transparency which is useful for transparent parts such as optical parts, automobile parts, and electric and electronic parts.

### Description of the Related Art:

In recent years, application of transparent plastics has been actively investigated for optical parts such as optical lenses, and optical fibres; automobile parts such as headlight lenses and sunroofs, and the like for productivity and light weight of the parts. With progress of these investigations, the requirements for the properties of the transparent plastics are becoming increasingly severe. In particular, improvement of the heat resistance thereof is strongly demanded.

Copolymers having succinimide units have been investigated comprehensively because of their high heat resistance. For example, copolymerisation of methyl methacrylate with N-aromatic-substituted maleimide is disclosed in JP-B-43-9753, JP-A-61-141715, JP-A-61-171708, and JP-A-62-109811; incorporation of N-aromatic-substituted maleimide into a styrene type resin by copolymerisation is disclosed in JP-B-47-6891, JP-A-61-76512, and JP-A-61-276807. At higher contents of the N-aromatic-substituted maleimide, the resins obtained by these methods have higher heat resistance, but involve disadvantages of brittleness, poor processability, discoloration, and so forth.

On the contrary, copolymers constituted of succinimide units and olefin units are superior in heat resistance and mechanical properties.

British Patent 815821 discloses a process for producing a succinimide copolymer by reaction of a maleic anhydride-olefin copolymer with a methylamine. In this process, a maleic anhydride copolymer is amidated with methylamine in benzene, then the solvent is removed, and the residue is heated in an oven to convert the formed amide to an imide to obtain a pale yellow resin. The colour tone of the polymer is said to be improved by eliminating the remaining maleic anhydride and conducting the reaction in an inert atmosphere.

*Journal of Polymer Science, Part* C, **No. 16**, p. 387 (1967) describes an imide-forming reaction (imidation) of maleic anhydride copolymer with an alkylamine in acetic acid or benzene.

The copolymers obtained by the above methods, however, are not sufficient yet to meet the demand for transparent plastics although the yellowness is somewhat mitigated.

After comprehensive studies to solve the above problems, it was found by the inventors of the present invention that the above problems are solved by a succinimide unit-containing maleic anhydride-olefin copolymer produced by reaction of a maleic anhydride-olefin copolymer with an amine and subsequent ring-closing imidation in a slurry state in a poor solvent, and the present invention has been completed.

### Summary of the Invention:

The present invention intends to provide a process for producing a copolymer which has low yellowness and is superior in transparency, heat-resistance, and mechanical strength.

According to the present invention a process for producing a copolymer having succinimide units represented by general formula (I), 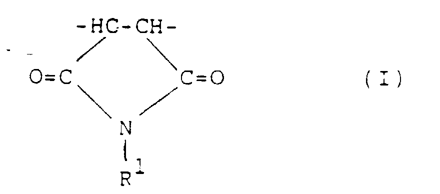 where R¹ represents a hydrogen atom, or an alkyl or cycloalkyl group of 1 to 6 carbons, comprises reaction of a copolymer comprising 40 - 60 mole % of maleic anhydride units, 60 - 40 mole % of olefin units, and 0 - 20 % of other copolymerisable monomer units, with an amine to convert the maleic anhydride units to succinimide units, characterised in that the succinimide units are formed by ring-closing at a temperature of 120 to 300°C in a slurry state in a solvent which has a solubility parameter not higher than 9.0. Such a solvent will be referred to herein as a poor solvent.

### Detailed Description of the Preferred Embodiment:

The maleic anhydride/olefin copolymer employed in the present invention can readily be prepared by radical copolymerisation of maleic anhydride, an olefin, and another copolymerisable monomer.

Olefins useful in the present invention include ethylene, isobutene, 2-methyl-1-butene, 2-methyl-1-pentene, 2-methyl-1-hexene, 2-methyl-1-heptene, 1-isooctene, 2-methyl-1-octene, 2-ethyl-1-pentene, 2-methyl-2-butene, 2-methyl-2-pentene, 2-methyl-2-hexene, and the like olefins. Of these olefins, isobutene is preferred from the standpoint of heat resistance and mechanical properties. The olefin may be a mixture of two or more olefins.

Another copolymerisable monomer may be incorporated into the above copolymer in such an amount that the above object of the present invention is not impaired. The copolymerisable monomer can include styrene and styrene derivatives such as α-methylstyrene, and methylstyrene; dienes such as 1,3-butadiene, and isoprene; methacrylate esters such as methyl methacrylate, and ethyl methacrylate; acrylate esters such as methyl acrylate, and ethyl acrylate; vinyl ethers such as methyl vinyl ether, and ethyl vinyl ether; and so forth. These monomers may be used singly or in combinations of two or more thereof.

The process for polymerisation of the maleic anhydride/olefin type copolymer employed in the present invention is not specifically limited. However, the polymerisation is preferably conducted by a radical precipitation polymerisation process in which copolymerisation is conducted in a solvent which dissolves maleic anhydride but does not dissolve the formed polymer and as a result precipitates the resulting copolymer in a particle state. Thereby the remaining maleic anhydride which affects the discoloration can be decreased and the resulting copolymer can be obtained in particle form. The solvent for the precipitation polymerisation is exemplified by acetate esters such as ethyl acetate, propyl acetate, and butyl acetate, and mixed solvents such as a mixture of an acetic ester with an alcohol. In the polymerisation, a dispersion stabiliser of cellulose type, polyvinyl alcohol type, or the like may be used.

The polymerisation initiator for the copolymerisation of maleic anhydride with the olefin may include organic peroxides such as benzoyl peroxide, lauroyl peroxide, octanoyl peroxide, acetyl peroxide, di(t-butyl) peroxide, t-butylcumyl peroxide, dicumyl peroxide, t-butyl peroxyacetate, t-butyl peroxybenzoate, and t-butyl peroxtneodecanoate; azo type initiators such as 2,2'-azobis (2,4-dimethylvaleronitrile), 2,2'-azobis (2-butyronitrile), 2,2'-azobisisobutyronitrile, dimethyl-2,2'-azobisisobutyrate, and 1,1'-azobis (cyclohexane-1-carbonitrile).

The polymerisation temperature depends on the decomposition temperature of the initiator. Generally the polymerisation is preferably conducted at a temperature ranging from 40 to 120°C.

The maleic anhydride/olefin copolymer used in the present invention is constituted of 40 - 60 mole % of maleic anhydride units, 60 - 40 mole % of olefin units, and 0 - 20 mole %, more preferably from 0 - 5 mole %, e.g. about 5 mole % still more preferably 0 - 1 mole %, e.g. about 1 mole % of other copolymerisable monomer units.

The copolymerisation is preferably carried out with an excess of the olefin, with the mole ratio of maleic anhydride to the olefin being not more than 1, since the remaining maleic anhydride monomer in the maleic anhydride/olefin copolymer causes discoloration of the imidated copolymer. The remaining maleic anhydride in the formed copolymer can be removed after the copolymerisation by washing the polymer particles with a solvent which dissolves maleic anhydride but does not dissolve the copolymer. The amount of the remaining maleic anhydride monomer in the maleic anhydride/olefin copolymer to be used in the present invention is in the range of preferably not more than 1 %, more preferably not more than 0.1 % by weight.

The maleic anhydride/olefin copolymer employed in the present invention preferably has a relative solution viscosity in the range of from 1.1 to 10.0, more preferably from 1.5 to 5.0, which is the ratio (t₁/t₀) of the flow time (t₁) of a 0.5 g/dl solution of maleic anhydride/olefin copolymer in N,N-dimethylformamide to the flow time (t₀) of N,N-dimethylformamide at 23°C. With such a relative solution viscosity, the resulting imide copolymer has improved moldability and improved mechanical strength.

The amine compound employed in the process of the present invention may include primary amines of 1 to 6 carbons such as methylamine, ethylamine, n-propylamine, isopropylamine, n-butylamine, s-butylamine, t-butylamine, and cyclohexylamine; ammonia; and compounds which produce readily ammonia or primary amine on heating such as dimethylurea and diethylurea. The amine compound may be used singly or in combination of two or more thereof. Of these amines, methylamine, ethylamine, isopropylamine, and cyclohexylamine are preferred since they are capable of improving greatly the heat resistance of the resulting copolymer.

The copolymer containing succinimide units of the present invention is synthesized from a maleic anhydride/olefin copolymer and an amine through two steps of reactions: the amidation reaction of the maleic anhydride/olefin copolymer, and the subsequent ring-closing imidation reaction. These reactions may be conducted in the same reactor either successively or continuously, or may be conducted respectively in separate reactors. The types of the reactors for the reactions are not limited, and may be a vessel type reactor, a tubular type reactor, a screw extruder type reactor, or the like.

In the process of the present invention at least the ring-closing imidation reaction of the amidated product of the maleic anhydride/olefin copolymer is conducted in a slurry state in the poor solvent.

The amidated product of the maleic anhydride/olefin copolymer employed in the production process of the present invention is preferably obtained in particle form. In particular, the maleic anhydride/olefin copolymer particles prepared by the aforementioned precipitation polymerisation is preferred for the reaction with the amine in a slurry state.

The solvent employed for the amidation is one which dissolves neither the maleic anhydride/olefin copolymer nor the amidated product thereof. The solvent includes aromatic solvents such as benzene, toluene, and xylene; acetate esters such as propyl acetate, and butyl acetate; aliphatic hydrocarbon solvents such as hexane, octane, decane, and dodecane; and mixtures thereof. In particular, the same solvent as used in the copolymerisation is preferably used in view of productivity. The temperature of the amidation reaction is usually in the range of from 0 to 150°C, but is not limited thereto.

The ring-closing imidation reaction in the present invention is conducted by heating the particulate amidated product of the aforementioned maleic anhydride/olefin copolymer dispersed in a poor solvent in a slurry state for ring closure.

The temperature of the imidation is in the range of from 120 to 300°C, preferably from 150 to 250°C, more preferably from 165 to 220°C. At the reaction temperature of lower than 120°C, the imidation reaction does not proceed at an appropriate reaction velocity, while at the reaction temperature of higher than 300°C, the slurry state cannot be maintained during the reaction owing to blocking, and discoloration is liable to be caused by heat deterioration on overheating. The reaction temperature may be raised or lowered, stepwise or continuously. A basic or acidic substance such as triethylamine or toluenesulfonic acid may be added as a reaction catalyst into the reaction system.

The imidation ratio depends on the reaction temperature, the reaction time, and other factors. For sufficient heat resistance, preferably not lower than 80 mole %, more preferably not lower than 95 mole %, still more preferably not lower than 99 mole % of the maleic anhydride units in the copolymer are converted to succinimide units. If the imidation ratio is lower than 80 mole %, the heat resistance of the copolymer tends to be lower.

The poor solvent used in the aforementioned ring-closing imidation includes those which do not cause blocking, by dissolution or swelling, of the amidation product of the maleic anhydride/olefin and the imidation product formed by the ring-closing imidation at the imidation temperature. The poor solvent herein includes those which has a solubility parameter, δ value (cal/cm³)^{1/2}, described in "Polymer Handbook" (3rd Edition, edited by J. Brandrup and E.H. Immergut, published by John Wiley & Sons), of not higher than 9.0, preferably not higher than 8.5, more preferably not higher than 8.0. If the solvent has a parameter of higher than 9.0, the slurry state during the reaction is liable to be destroyed by blocking.

The boiling point of the poor solvent is usually not lower than 60°C, preferably not lower than 120°C, more preferably not lower than 150°C, still more preferably not lower than 165°C. If the boiling point of the solvent is lower than 60°C, the pressure during the reaction is naturally higher. The reaction may be conducted under pressure with a low-boiling solvent. However, the boiling point of the solvent is preferably lower than the imidation reaction temperature at the ordinary atmospheric pressure, since satisfactory results are obtained by removal of formed water and excess amine during the reaction. The preferred solvent includes hydrocarbon solvents such as n-hexane, n-decane and n-dodecane.

The copolymer produced by the process of the present invention may additionally contain a thermal stabiliser, a UV stabiliser, a lubricant, a dye, an antistatic agent, another plastics, an elastomer or the like, if necessary.

The resin produced by the process of the present invention is superior in colour tone and transparency, and is useful for wide application fields including optical parts, automobile parts, electric and electronic parts, medical instrument parts, food packaging and the like. Further, a composite of the copolymer of the present invention with another plastic or elastomer also gives a product superior in colour tone.

The present invention is described more specifically below by reference to examples. The present invention is not limited to the examples.

The formed copolymers were identified by elemental analysis, IR measurement, and NMR measurement in the examples.

The relative solution viscosity was measured by using, N,N-dimethylformamide (DMF) as the solvent with an Ubbelohde viscometer at 23°C.

The molecular weight of the formed copolymer was measured by a gel permeation chromatography apparatus (GPC, manufactured by Tosoh Corporation) with chloroform as the solvent in terms of polystyrene.

The yellowness of the obtained copolymer was measured by Color Computer (manufactured by Suga Tester K.K.) with a press-molded specimen of 0.8mm thick according to JIS K-5401 (Reflection method, tristimulus values of reflection plate, x: 79.44, y: 82.22, z: 94.51).

### Reference Example 1

### (Synthesis of maleic anhydride/isobutene copolymer)

Into a 30-litre autoclave equipped with a stirrer, a nitrogen-introducing tube, an isobutene-introducing tube, a thermometer, and a gas-releasing tube, were charged 2.8 kg of maleic anhydride, 10 g of lauryl mercaptane, 6.3 g of t-butyl peroxypivalate, and 19 litres of isopropyl acetate. The interior of the autoclave was purged with nitrogen several times. Then 5.2 litres of liquefied isobutene was charged therein, and reaction was allowed to proceed at 60°C for 6 hours.

The resulting particulate matter was collected by centrifugation and dried to obtain 4.4 kg of a maleic anhydride/isobutene copolymer. The obtained copolymer contained 50 mole % of maleic anhydride units according to elemental analysis. The relative solution viscosity of the copolymer was 2.0. In the same manner, several batches of the reaction were carried out to obtain the samples of the maleic anhydride/isobutene copolymer (CP1).

### Example 1

In a 30-litre autoclave equipped with a stirrer, a nitrogen-introducing tube, a thermometer, and a gas-releasing tube, were placed 2 kg of the particulate copolymer (CP1) prepared in Reference Example 1 and 20 litres of isopropyl acetate. Thereto, 750 ml of liquefied methylamine was introduced, and then the content of the autoclave was stirred at 80°C for 5 hours. After the reaction, the particulate polymer (P1) was collected by centrifugation and dried to obtain 2.4 kg of the amidation product of the maleic anhydride/isobutene copolymer (P2).

The copolymer (P2) was confirmed to be amidated through ring opening of the acid anhydride group by the amine from the disappearance of the absorption peak of acid anhydride at 1850 cm⁻¹ and the appearance of new peaks of an amide group and a carboxylic acid group in the IR spectrum.

Subsequently, in a 15-litre autoclave equipped with a stirrer, a nitrogen-introducing tube, a thermometer, and a distillation device, were placed 1.8 kg of the above particulate amidated maleic anhydride/isobutene copolymer (P2), and 7.2 kg of n-decane (solubility parameter δ value: 6.6). The interior of the autoclave was purged with nitrogen. Then with removal of produced water and the excess amine, the temperature was raised up to 165°C, and the reaction was allowed to proceed for 5 hours. After the reaction, the obtained particulate matter (P3) was collected by filtration, washed with hexane, and dried. The imidation ratio was found to be 100 %, and the copolymer (P3) was confirmed to constituted of 50 mole % of N-methylsuccinimide units and 50 mole % of isobutene units according to characteristic absorption peaks at 1700 cm⁻¹ and 1780 cm⁻¹ in IR spectrum, ¹³C-NMR data, and elemental analysis. The obtained particulate polymer (P3) was pressed at 230°C for 3 minutes to prepare a plastic sheet for yellowness evaluation. The obtained sheet (P4) had yellowness of 3.3 in average. The resulting sample (P4) was soluble in chloroform, and had a number-average molecular weight of 120000 according to GPC.

Then 100 parts by weight of the obtained particulate imidated copolymer (P3) and 0.2 part by weight of tris (2,4-di(t-butyl)phenyl) phosphite were mixed by shaking, and the mixture was melt-extruded continuously under nitrogen atmosphere by means of a twin-screw extruder set at temperatures of 150°C, 260°C, 280°C, and 270°C from the bottom of the hopper to the tip nozzle direction to obtain a transparent strand. The resulting strand was cut into pellets (P4).

The pellets (P4) were injection-molded into test pieces (P5) by means of Minimat (a machine manufactured by Sumitomo Heavy Industries, Ltd.) at an injection temperature of 300°C at a metal mould temperature of 100°C.

The test piece (P5) had a flexural strength of 1300 kg/cm², a flexural modulus of 47000 kg/cm², and a heat distortion temperature of 155°C after annealing.

### Comparative Example 1

In a 15-litre autoclave equipped with a stirrer, a nitrogen-introducing tube, and a thermometer and a distillation device, were placed 2.7 kg of the above particulate amidated maleic anhydride/isobutene copolymer (P2), and 6.3 kg of benzene (solubility parameter δ value: 9.2). The interior of the autoclave was purged with nitrogen. Then the temperature was raised up to 165°C, and reaction was allowed to proceed for 5 hours. After the reaction, the resulting polymer (P6) was taken out and dried. From the polymer, test pieces (P7) for yellowness evaluation were prepared by press moulding. The yellowness of the test pieces (P7) was 28 in average.

### Comparative Example 2

In a 15-litre autoclave equipped with a stirrer, a nitrogen-introducing tube, a thermometer, and a distillation device were placed 2.7 kg of the above particulate amidated maleic anhydride/isobutene copolymer (P2), and 6.3 kg of cyclohexanone (solubility parameter δ value: 9.9). The interior of the autoclave was purged with nitrogen. Then the temperature was raised up to 160°C. Blocking of the polymer particles occurred 10 minutes after the temperature raise, and the reaction was interrupted.

As clearly shown in the examples, a succinimide copolymer having low yellowness and excellent transparency can prepared according to the process of the present invention at a high productivity. The copolymer is useful in various application fields such as optical parts, automobile parts, and electric and electronic parts.

## Claims

1. A process for producing a copolymer having succinimide units represented by general formula (I), 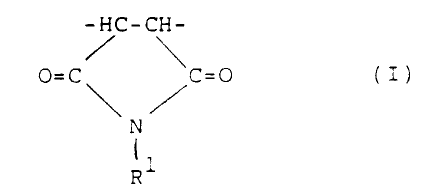 where R¹ represents a hydrogen atom, or an alkyl or cycloalkyl group of 1 to 6 carbons, comprising reaction of a copolymer comprising 40 - 60 mole % of maleic anhydride units, 60 - 40 mole % of olefin units, and 0 - 20 mole % of other copolymerizable monomer units with an amine to convert the maleic anhydride units to the succinimide units, characterised in that the succinimide units are formed by ring-closing at a temperature of 120 to 300°C in a slurry state in a solvent which has a solubility parameter not higher than 9.0.

2. A process as claimed in claim 1 characterised in that the maleic anhydride/olefin copolymer has a relative solution viscosity in the range of from 1.1 to 10.0.

3. A process as claimed in claim 1 or 2 characterised in that the amine is a primary amine of 1 to 6 carbon atoms.

4. A process as claimed in anyone of claims 1 to 3 characterised in that at least 80 mole % of the maleic anhydride units are converted to succinimide units.

5. A process as claimed in claim 4 in which at least 99% of the maleic anhydride units are converted to succinimide units.

6. A process as claimed in any one of claims 1 to 5 characterised in that the solvent has a solubility parameter not higher than 8.5.

7. A process as claimed in claim 6 characterised in that the solvent has a solubility parameter not higher than 8.0.

8. A process as claimed in anyone of claims 1 to 7 characterised in that the solvent has a boiling point not lower than 120°C.

9. A process as claimed in claim 8 characterised in that the solvent has a boiling point not lower than 150°C.

## Patentansprüche

1. Verfahren zur Herstellung eines Copolymers mit Succinimideinheiten der allgemeinen Formel (1) 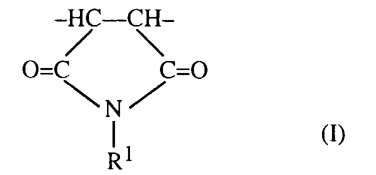 in der R¹ für ein Wasserstoffatom oder einen Alkyl- oder Cycloalkylrest mit 1 bis 6 Kohlenstoffatomen steht, umfassend Umsetzung eines Copolymers, umfassend 40 - 60 Mol% Maleinsäureanhydrideinheiten, 60 - 40 Mol% Olefineinheiten und 0 - 20 Mol% weitere copolymerisierbare Monomereinheiten, mit einem Amin, wodurch die Maleinsäureanhydrideinheiten in die Succinimideinheiten umgewandelt werden, dadurch gekennzeichnet, daß die Succinimideinheiten bei einer Temperatur von 120 bis 300 °C im Zustand einer Aufschlämmung in einem Lösungsmittel, das einen Löslichkeitsparameter von höchstens 9,0 hat, durch Ringschluß erzeugt werden.

2. Verfahren nach Anspruch 1, dadurch gekennzeichnet, daß das Maleinsäureanhydrid-Olefin-Copolymer eine relative Viskosität in Lösung im Bereich von 1,1 bis 10,0 aufweist.

3. Verfahren nach Anspruch 1 oder 2, dadurch gekennzeichnet, daß das Amin ein primäres Amin mit 1 bis 6 Kohlenstoffatomen ist.

4. Verfahren nach einem der Ansprüche 1 bis 3, dadurch gekennzeichnet, daß wenigstens 80 Mol% der Maleinsäureanhydrideinheiten in Succinimideinheiten umgewandelt werden.

5. Verfahren nach Anspruch 4, in dem wenigstens 99 % der Maleinsäureanhydrideinheiten in Succinimideinheiten umgewandelt werden.

6. Verfahren nach einem der Ansprüche 1 bis 5, dadurch gekennzeichnet, daß das Lösungsmittel einen Löslichkeitsparameter von höchstens 8,5 hat.

7. Verfahren nach Anspruch 6, dadurch gekennzeichnet, daß das Lösungsmittel einen Löslichkeitsparameter von höchstens 8,0 hat.

8. Verfahren nach einem der Ansprüche 1 bis 7, dadurch gekennzeichnet, daß das Lösungsmittel einen Siedepunkt von wenigstens 120 °C hat.

9. Verfahren nach Anspruch 8, dadurch gekennzeichnet, daß das Lösungsmittel einen Siedepunkt von wenigstens 150 °C hat.

## Revendications

1. Procédé pour la préparation d'un copolymère ayant des motifs de succinimide représentés par la formule générale (I), 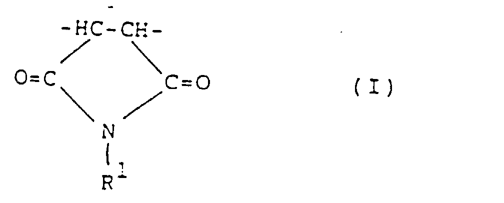 dans laquelle R¹ représente un atome d'hydrogène, ou un groupe alkyle ou cycloalkyle de 1 à 6 carbones, comprenant la réaction d'un copolymère comprenant 40 - 60 % en moles de motifs d'anhydride maléique, 60 - 40 % en moles de motifs d'oléfine, et 0 - 20 % en moles de motifs d'autres monomères copolymérisables avec une amine pour transformer les motifs d'anhydride maléique en motifs de succinimide, caractérisé en ce que les motifs de succinimide sont formés par fermeture du cycle à une température de 120 à 300°C dans un état bouillie dans un solvant qui a un paramètre de solubilité pas supérieur à 9,0.

2. Procédé selon la revendication 1, caractérisé en ce que le copolymère anhydride maléique/oléfine a une viscosité relative en solution dans la gamme de 1,1 à 10,0.

3. Procédé selon la revendication 1 ou 2, caractérisé en ce que l'amine est une amine primaire de 1 à 6 atomes de carbone.

4. Procédé selon l'une quelconque des revendications 1 à 3, caractérisé en ce que au moins 80 % en moles des motifs d'anhydride maléique sont transformés en motifs de succinimide.

5. Procédé selon la revendication 4, dans lequel au moins 99 % des motifs d'anhydride maléique sont transformés en motifs de succinimide.

6. Procédé selon l'une quelconque des revendications 1 à 5, caractérisé en ce que le solvant a un paramètre de solubilité pas supérieur à 8,5.

7. Procédé selon la revendication 6, caractérisé en ce que le solvant a un paramètre de solubilité pas supérieur à 8,0.

8. Procédé selon l'une quelconque des revendications 1 à 7, caractérisé en ce que le solvant a un point d'ébullition pas inférieur à 120°C.

9. Procédé selon la revendication 8, caractérisé en ce que le solvant a un point d'ébullition pas inférieur à 150°C.
